# EUROPEAN PATENT SPECIFICATION

(11) **EP 2 552 136 B1**
(45) Date of publication and mention of the grant of the patent: **05.09.2018**
(21) Application number: 11175846.2
(22) Date of filing: 28.07.2011
(51) Int. Cl.: G08G 1/0967, H04W 4/06, H04L 29/08, G08G 1/01, H04L 12/18

(54) **Communication method of broadcast at a localized area of a location of an infrastructure facility, communication system, communication module, localized broadcast data structure and application layer computer program**
Kommunikationsverfahren für Rundfunk in einem lokalisierten Bereich eines Ortes einer Infrastruktureinrichtung, Kommunikationssystem, Kommunikationsmodule, lokalisierte Rundfunkdatenstruktur und Anwendungsschichtcomputerprogramm
Procédé de communication de diffusion dans une zone localisée d'emplacement d'une installation d'infrastructure, système de communication, module de communication, structure de données de diffusion localisée et programme informatique de couche d'application

(43) Date of publication of application: 30.01.2013
(73) Proprietor: Gemalto M2M GmbH, 81541 Munich (DE)
(72) Inventor: Wehmeier, Lars, 14612 Falkensee (DE); Breuer, Volker, 16727 Bötzow (DE)
(74) Representative: Grevin, Emmanuel

(56) References cited:
- EP-A2- 1 303 107
- WO-A1-2011/023221
- US-A1- 2004 219 920
- US-A1- 2006 187 897
- US-A1- 2009 080 355
- US-A1- 2010 112 978
- US-A1- 2011 012 755
- US-A1- 2011 034 201
- DEREK CAVENEY: "Cooperative Vehicular Safety Applications", IEEE CONTROL SYSTEMS MAGAZINE, IEEE SEWRVICE CENTER, PISCATAWAY, NJ, US, vol. 30, no. 4, 1 August 2010 (2010-08-01) , pages 38-53, XP011313171, ISSN: 0272-1708
- BOUASSIDA M S ET AL: "On the congestion control within VANET", WIRELESS DAYS, 2008. WD '08. 1ST IFIP, IEEE, PISCATAWAY, NJ, USA, 24 November 2008 (2008-11-24), pages 1-5, XP031448164, ISBN: 978-1-4244-2828-1

## Description

The invention relates to a communication method of broadcast at a localized area of a location of an infrastructure facility with a traffic participants mobile entity under supervision of the infrastructure facility. The invention also relates to a communication system for broadcast at a localized area of a location of an infrastructure facility with a traffic participants mobile entity under supervision of the infrastructure facility. In particular the method and system is utilized for protection of a plurality of traffic participants. The invention is also related to a respective communication module of an user equipment of a traffic participant wherein the module is in particular adapted for use in the communication system. The invention is also related to an application layer computer program for internal communication between an user interface and a communication module of an user equipment adapted for performing one or more of the steps of the communication method. The invention is also related to a respective broadcast data structure.

The communication method and system mentioned in the introduction are meant to be in the framework of an infrastructure to car communication system, which basically is installed along roads and in particular at preferred locations of an infrastructure facility like a bridge or a tunnel or the like; such concept is generally also referred to as a Infrastructure-to-Vehicle I2V" communication and may embrace also extensions leading to a so called Car-to-Car communication but in contradistinction to a pure "Car2Car"-communication system the I2V-communication aims to signalize a traffic participant hazardous situation, which may arise from the infrastructure facility rather than from another mobile entity (like a car, truck or trailer) of other traffic participants.

Thus, an I2V-communication for instance can be established at road intersections or other extraordinary sites along a road and basically is based on a broadcast at a localized area of a location of an infrastructure facility. The I2V-communication can inform a traffic participant for instance about stop signs, traffic lights or hazardous situations along a road at an elected site along the road. A hazardous situation may for instance arise from an icy bridge, or a traffic jam in a tunnel or a dangerous road corner or bend or the like. Thus also, the method and system of interactive broadcast from a localized area at a location of an infrastructure facility can partly embrace also a Car2Car communication where the broadcast is directed from an at least occasionally immobile entity like for instance an emergency vehicle or a construction vehicle in operation along a road site.

The European Commission decided in 1999 to start using the frequency range at 5.9 GHz, namely 75 MHz around 5.9 GHz (preferable 5,885 to 5,905 GHz) for their Car2Car communication project, which shall allow direct communication between cars and infrastructure elements. The project may embrace public safety applications also as private applications. Standardization is in progress under IEEE 802 and IEEE 1609 (Wave-Wireless Access for Vehicular Environment).

Whereas, the direct C2C-communication is not considered here as any such warning communicated between cars would be dependent on location and time, up to now the above mentioned I2V communication system is considered as non-time critical. Here, a WLAN spectrum for outdoor use in the range of 5,470 to 5,725 GHz is available. However, it turned out, that also an I2V-system can in one way or the other be time critical. E.g. the warning of a bridge may be still of use in rural areas being several kilometers away, whilst in urban areas such an information is of no more use for cars being in proximity of the sending vehicle but not of the infrastructure being warned about. Hence in an I2V-communication it is likely that finally the adoption of an infrastructure based warning system having corresponding modules in the cars is of special interest. Such scenarios cannot be addressed like others for instance transmitting a simple broadcast based on results of sensors applied in or to the dangerous area of an infrastructure facility. Hazardous traffic site scenarioslike a bridge being dangerous for icing with a wind strength sensor or a temperature measurement unit or tunnels with a traffic jam or dangerous goods inside where a truck with a dangerous goods transport is a danger as such for all following cars-- need to be addressed with a specific solution of a communication method of broadcast at a localized area of a location of an infrastructure facility.

In US 2010/0112978 relates to broadcasting of information as part of a vehicle-to-vehicle communication service. Therein in the broadcast message information are transmitted relating to a certain vehicle by means of an identifier. This publication however does not offer a solution for a I2V system. Further with the suggested system no interactive broadcast is established, in particular due to that in the broadcasted messages transmitted no request for a response is comprised.

According to US 2011/0012755 it is suggested to broadcast by means of an I2V-system intersection map data to vehicles in the proximity of an intersection, and remote intersection map data relating to another intersection with a lower repetition rate. Not solved is the issue of interactive broadcast, due to the lack of a request to respond to the broadcast. Hence the infrastructure communication system has no means to react in case of a entering vehicle fulfilling a certain physical condition.

In US 2006/0187987 a multicast solution is suggested for alerting of a wireless group of mobile receivers by means of sending an encrypted message. Consequently the group definition is carried out that way the only the group member which are enabled to decrypt the message are supposed to read the broadcasted message .While each member of the group is supposed to acknowledge receipt, hence no real interactive broadcast is possible with this solution, wherein a predetermined or further condition is checked and allows quick reaction on the infrastructure system side.

The publication EP1303107 A2) suggests a multicast messaging to a closed group of targets by identifying a multicast address of the respective targets. The respective base stations where the target's address has been determined get paged in order to transmit the paging signal to all mobile stations in the range of the base stations. The receiving targets which are actually addressed respond for confirming participation in the multicast group. The actual multicast is then supposed to happen. This solution neither fulfils the speed requirements of the technical problem at stake, nor offers an interactive broadcast, where depending upon a predetermined condition the mobile entity receiving the broadcast decides if to respond or not.

A multicast paging of is described in US2009/0080355A1. In order to overcome the congestion of a mass of receiving devices (access targets), a local filter server is used. Hence the multicast group is described in the meaning of being closed. This does not solve the current problem at stake, that a predetermined condition resp. further is checked at the receiving mobile entity which governs if the mobile entity is belonging to the group and is supposed to respond to the broadcasted message.

This is where the invention comes in the object of which is to specify a generalized communication method as mentioned in the introduction, in particular a generalized I2V-method and -system, which is improved beyond a pure broadcast system as known in the prior art. In particular, the object is directed to a communication method and communication system for broadcast from a localized area at a location of an infrastructure facility to a multitude of communication modules wherein each module belongs to of a user equipment of a traffic participant. The communication module may be temporally or steadily fixed to traffic participants mobile entity, like a car, a truck or a trailer or the like.

As regards the method, the object is achieved by the method as mentioned in the introduction wherein in accordance with the invention an interactive broadcast at a localized area of a location of an infrastructure facility, in particular for protection of a plurality of traffic participants, with a traffic participants mobile entity under supervision of the infrastructure facility, is proposed. According to the invention the communication can be established between an at least temporarily immobile infrastructure communication station of an infrastructure communication system having a number of infrastructure communication stations in the localized area and an at least temporarily mobile communication module of a user equipment of at least one of a plurality of traffic participants. In particular the module in the user equipment may be attached to a traffic participant's entity or mobile telephone. According to the invention, the communication method of interactive broadcast comprises the steps as defined in claim 1.

The invention leads to a communication system for interactive broadcast at a localized area of a location of a infrastructure facility with a traffic participants mobile entity under supervision of the infrastructure facility, comprising:
- an at least temporarily immobile infrastructure communication station of an infrastructure communication system having a number of infrastructure communication stations in the localized area and
- an at least temporarily mobile communication module of a user equipment of at least one of a plurality of traffic participants, and
- a communication network communicatingly coupled to the infrastructure communication station. The system for interactive broadcast according to the invention is further adapted as outlined in claim 11.

Thus -- in contradistinction to a pure broadcast system known in the art wherein no response to a broadcasting station is used-- the invention provides a communication method and system of interactive broadcast, which allows an interaction of a traffic participant, i.e. a traffic participant's mobile entity, with the infrastructure, i.e. an immobile infrastructure communication station, under supervision of the infrastructure facility.

Generally the communication network can be wide area or local area network or other communication network like mobile telephone network. In particular, of use is a cell-based telephone network communicatingly coupled to the infrastructure station. Preferred is a packet switching network like a GPRS (General Packet Radio Service) or UMTS (Universal Mobile Telecommunication System) or PDN (Packet Data Network).

A location of an infrastructure facility for protection of a plurality of traffic participants in particular comprises an extraordinary dangerous area or other hazardous or selected locations of an infrastructure facility like an icy bridge or a traffic jam in a tunnel or a stop sign or traffic light. The invention starts from the consideration that also in an I2V-communication scenario, the use of a warning system for car drivers or other traffic participants prior an infrastructure facility, a driver shall not only be warned prior to passing such an area. Also, in dependence of the actual status of the infrastructure and a traffic situation, the localized broadcasting of information in the broadcast message from the infrastructure communication station shall be updatable. Thus, the invention has recognized that a working concept of communication requires not only a step of receiving a broadcast message in the module of the user equipment of a traffic participant but also a step of responding of at least one response message to the broadcast message. The invention recognized that responding can be established by signalling of a module of an user equipment into a network communicatingly coupled to the infrastructure station.

Thus, a communication system for interactive broadcast from a localized area at a location of an infrastructure facility to a multitude of user equipments of traffic participants shall require a communication response to a broadcast message received by the traffic participants.

The invention has recognized that these steps are a prerequisite to allow a working interaction subsequent a broadcast by communication with the infrastructure (in fact with more than one infrastructure station) via a communication system and in dependence of a traffic situation; thus allowing for an interactive broadcast as described above..

Furthermore, in contradistinction to assumptions of the prior art the invention recognized that a rather quick response shall be enabled in the communication method to the broadcast from a localized area. The invention considers this item as particular beneficial for warning traffic participants quickly approaching the localized area of a location of an infrastructure facility. For example, considering that an information system of the invention is deployed at 5.9 GHz the achievable coverage may be limited to for instance several 100 meters. Hence, a car, a truck, a trailer or other mobile entities of a traffic participant may approach with a velocity of for example 80 km/h and therefore have less than 10 seconds for reading and reacting if needed related to the information provided. For speeding up an exchange of information for the concept of interactive broadcast the concept of the instant invention suggests that
- the broadcast message contains a dedicated information dedicated to a group of communication modules of user equipments wherein the group of communication modules are selected according to a predetermined condition, and
- the broadcast message contains a request for a need to response; in particular a request for a need to response in case of a positive verification of a further condition, in particular the predetermined condition, by the communication module.
the method further comprises the steps of:
- verifying the further condition, in particular the predetermined condition, and in case of a positive verification of the condition: responding at least one response message to the broadcast message by signaling of the communication module of the user equipment into a communication network communicatingly coupled to the infrastructure communication station, characterized in that the further condition and/or the predetermined condition is a physical condition.

Thus, the concept of the instant invention provides an optimized information provisioning on the hand with a grouping key electing a dedicated group of modules for which a dedicated information is relevant and on the other hand a request for a need to response. The response can be due upon a positive verification of a further condition, which preferably is the predetermined condition but not necessarily has to be the predetermined condition; i.e. the further condition may have other or further parameters as compared to the predetermined condition; thus this allows a dedicated interactive reaction on the broadcast message depending on the group the particular module of the traffic participant is belonging to.

In other words, the infrastructure stations localized broadcast indicates the need for a response or reaction of an user module, which has a specific current physical condition, namely the predetermined condition of the group of modules. This reduces the amount of information to be communicated on the one hand between all entities of the system and nevertheless focuses the dedicated information to the dedicated group of modules. Thereby the achievable coverage of an information system deployed at 5.9 GHz for example allows timely and efficiently an exchange of information upon automated response of the traffic participant; also such that a traffic participant can react depending on a traffic warning within a sufficient amount of time like for instance within 10 seconds or the like.

As regards the system, the object of the invention is achieved according to claim 11. In particular the system is providing that
- the broadcast message contains a dedicated information part with dedicated information dedicated to a group of communication modules of user equipments wherein the group of communication modules are selected according to a predetermined condition, and
- the broadcast message has a request part with a request for a need to response in case of a positive verification of a further condition, in particular the predetermined condition, by the communication module.

Thus the group of modules is classified in one class of a system of classes, wherein said one class is distinct from another class in at least one physical circumstance or circumstances commonly related to said group of modules or the modules carrying mobile entities of the traffic participants or the traffic participants. I. e. to provide the predetermined condition grouping of the module is performed according to one physical or other circumstance related to the user equipment carrying participant.

Developed configurations of the invention are further outlined in the dependent claims. Thereby, the advantages of the proposed concept are even more improved.

In a particular preferred development an at least localized broadcasting of an information in a broadcast message is performed from the infrastructure communication station.
In a particular preferred embodiment the broadcast message contains a request in form of a dedicated request dedicated to a group of modules of user equipments wherein the group of modules are selected according to predetermined condition. Preferably the dedicated request comprises a need to response a content of response in case of a positive verification of a further condition, in particular the predetermined condition, by the communication module. In a particular preferred developed embodiment e.g. in addition to a dedicated information to a particular group of traffic participants also only this particular group of traffic participants will be obliged to respond to the broadcast message. Thus the need to response can be adapted to a parameter of the traffic participant. E.g. --as an examplewhen a truck carrying hazardous goods enters a traffic site or another infrastructure facility, it is advantageous to retrieve from the response and the content of response of a module in the truck further information e.g. about the location and the kind of hazardous goods of the truck. Whereas a usual car and also an emergency or fire car does not belong to the particular group of traffic participants of the truck and will not be obliged to respond to the broadcast, nevertheless the usual car and an emergency or fire car will receive different dedicated information. E.g. the emergency or fire car would have a permission information (i.e. to enter the traffic site) and the usual car would have a prohibition information (i.e. not to enter the traffic site).

In particular said further condition and/or predetermined condition is selected at least according to the type of traffic participant and/or the relation of the traffic participant to the dedicated information and/or dedicated request. For instance, the dedicated information and/or request comprises a need to respond a dedicated content of response in case of a positive verification of a further condition, in particular the predetermined condition, by the module. For instance the dedicated content of response may include a type of a traffic participants mobile entity (like a car, truck or trailer) and/or the nature of mobile entity (like information about the carrying of dangerous or non-dangerous goods).

In a further preferred development a further condition and/or the predetermined condition is verified in the receiving module, and in case of a positive verification, the receipt is acknowledged. Preferably the acknowledgement is communicated from the receiving communication module by responding to the broadcast message with a response message to the infrastructure communication system and /or the communication network. As outlined in the further mentioned developments, the response message may comprise merely a sole acknowledgement. The response message may additionally comprise a dedicated content response sent with the response message to the infrastructure.

For accelerating the receipt of the dedicated information and the dedicated request by the communication module preferably the broadcast message is accompanied by a broadcast message control pointing wherein the control pointing indicates the position of dedicated information part and/or indicates the position of a dedicated request part of the broadcast message. The control pointing may be established as a header or control channel information. The control pointing is preferably related to the broadcast message and adapted to point to the information part and/or request part of the broadcast message.

For instance, a header can be realized on the same carrier as the dedicated information. In particular, it is preferred that the message control pointing is provided separately from the broadcast message. For instance a control channel information can be realized on a control channel or the like separate from the information channel. A control channel information can be realized on a different carrier as compared to the dedicated information.

The control pointing is established to point at a position of a dedicated part of the broadcast message. The position can be specified by specifying time parameter or a frequency parameter or a carrier specification parameter of the respective broadcast carrier. This allows the communication module to find the relevant dedicated information part and its dedicated request part very effectively. This effectively shortens the time of analysis and puts the communication module quickly in the state of verification of a further condition and/or the predetermined condition and possibly in the state of response.

In a particular preferred embodiment the control pointing is comprising a control information related to the dedicated information part, in particular related to a last update of the dedicated information part. This advantageously provides a time mark, in particular a point of time and/or a time duration since the point of time of last update of the dedicated information placed in the broadcast message. The control information, in particular time mark, is preferably placed in the header. Thereby the recipient is able to recognize already by reading the header whether the dedicated information part will contain some new information which shall be read. On the other hand --once from the control information, in particular time mark, in the header the recipient retrieves that no new information is provided-- reading of the dedicated information part can be obsolete. Thus the control information will allow for reducing the amount of reading obligations. In particular only the latest updated dedicated information has to be read once.

In a further preferred embodiment the signalling of the module of the user equipment in the network is according to general network parameters settings, based on user equipment autonomous scheduling. This allows also transmission in neighbouring cells or proximity cells of the network by means of a general grant mechanism. Thus, the response signalling of the communication module can be interpreted by the network as localized and autonomous scheduling communication and can even exceed the coverage range of a nodeB and thus allow communication also beyond neighbouring cells. This allows a very quick forwarding of a response signalling of a communication module in the communication system throughout the network. Thereby a quick forward of the response message to the broadcasting infrastructure communication station is possible.

In a preferred embodiment the module of the user equipment is used on basis of a 5.9 GHz carrier, in particular for localized interactive broadcasting in a localized area of several 100 meters, in particular restricted to less than 10.000 meters. In particular this embodiment can be realized by providing a broadcast unit, adapted to receive a broadcast on the 5.9 GHz carrier, and a communication unit, adapted to communicate via the communication network. Both units can be integrated in one module or provided separately in two modules.

In another embodiment, also preferred, a cell broadcast can be used for localized interactive broadcasting in a localized area of several 100 meters, in particular restricted to less than 10.000 meters. Advantageously this embodiment can be realized with only one communication unit. In particular a GSM-Cell broadcast unit or a FM based broadcast unit (e.g. RDS) or other units based on other as such known broadcast systems can be used.

Preferably upon receipt of a response through the infrastructure communication system a facility action is triggered. Additionally or alternatively an information item and/or a dedication item and/or a request item in the broadcast message from the infrastructure station can be decided to be changed or to be kept unamended. The decision is preferably taken in dependence of the response content and/or a state of a supervision installation at the infrastructure facility. A supervision installation can be realized by suitable sensing means like a sensor, camera or the like means for supervising the infrastructure facility and its environment. Also the supervision installation preferably comprises traffic regulation means, like e.g. a traffic light, a barrier, a horn or the like. Thus in a further preferred development of the method an infrastructure facility (like a bridge or a tunnel or another traffic carrying site), more precisely a status of the infrastructure facility is decided to be kept unamended or to be changed in dependence of the response content. In effect the infrastructure facility and the systems connected thereto can react quickly on a hazardous traffic situation. In particular the supervision installation can be adapted with a change of status. E.g. a traffic light can change from green to red or a barrier can be closed or vice versa. E.g. also a broadcast and communication system can change the content of messages and request therein; in particular for providing warnings or gathering more information from the traffic participants. Thus, advantageously the broadcast and supervision situation at a location of an infrastructure facility can vary in dependence of the acknowledgement or content response of a communication module. This advantageously allows further traffic participants to react on changing traffic situations in a localized area at a location of an infrastructure facility.

Preferably a first immobile infrastructure communication station is placed prior to and a second immobile infrastructure communication station is placed after the infrastructure facility, wherein the first and second immobile infrastructure communication stations are assigned to each other. In a particular preferred embodiment, the request for a need to respond in case of a positive verification of a further condition and/or predetermined condition comprises a request for a first response at times before approaching the infrastructure facility. Thus, a broadcast and/or the state of supervision installation at the infrastructure facility is changed from an original state independent of a first response. In a further embodiment, the request for a need to respond in case of a positive verification of a further condition and/or the predetermined condition comprises a request for a second response at times after having passed the infrastructure facility. Thus, broadcast and/or the state of supervision installation at the infrastructure facility can be changed back to an original state independent of the second response.

In a particular preferred embodiment of the communication system a first mobile infrastructure communication station is placed before and a second mobile infrastructure communication station is placed after the infrastructure facility wherein the first and second mobile infrastructure stations are assigned to each other. Thus, to make efficient use of such warning schemes it is for instance considered that corresponding infrastructure stations are placed prior and after dangerous sites along a road like for instance a tunnel or the like.

In the tunnel example it is important to know prior entering a tunnel whether a truck carrying a dangerous good has entered or is still in or has left the tunnel. Thus, furthermore in case of tunnel scenarios it may be very likely that warning will be provided of a dangerous truck entering a tunnel. The warning sent from the truck to the infrastructure communication station placed prior to the tunnel may cause the receiving side to change its messaging state to prevent further cars from entering the tunnel.

Also further cars may be informed by the infrastructure communication station at the opposite side of the tunnel to prevent also the cars there from further entering. After the dangerous truck has left the tunnel a warning needs to be retaken at both sides. Also in a further developed embodiment an infrastructure communication station and/or the mobile communication module can be adapted to communicate further information of an external unit. In particular an external unit can be formed by a timer unit or a GPS or a navigation unit or other external unit e.g. implemented in a smartphone or the like user equipment. In an example --e.g. in the tunnel scenario-- a navigation unit in the truck and/or mobile user equipment in the truck can be adapted to submit a route of the truck to the infrastructure communication station; thus via the infrastructure communication station it can be approved that the truck indeed is in the tunnel. Also a timer unit can be used to provide a "set off"-period to define for the system that a hazardous situation is assumed to be abandoned (i.e. the truck is assumed to have left the tunnel) even in the case an explicit response should have been not possible.

The instant preferred embodiment allows an efficient communication between the first and second mobile infrastructure communication stations be that it may by broadcasting or by network communication.

The invention also comprises a communication module for a user equipment of a traffic participant, in particular for use in a communication system as described above, wherein the module is adapted to perform the steps as defined in claim 15.

The concept of the invention also leads to a localized broadcast data structure of claim 18. The inventive broadcast structure comprises a dedicated information part and/or a dedicated request part and a broadcast message control pointing. According to the invention a dedicated information dedicated to a group of communication modules of user equipments wherein the group of communication modules are selected according to a predetermined condition and a request for a need to response in case of a positive verification of a further condition, in particular the predetermined condition, by the communication module.

The condition preferably is selected at least according to the type of traffic participant and/or the relation of the traffic participant to the dedicated information and a request for a need to response in case of positive verification of the a further condition and/or the predetermined condition by the module. Further, the localized broadcast data structure comprises a broadcast message control pointing having a pointing information to the position of a dedicated information part and/or request part of the broadcast message.

Preferably, the dedicated information part is adapted to dedicate a group of modules by defining
- a predetermined condition and/or
- a need to request for the group and/or
- a content for response for the group.

In a particular preferred development the dedicated information part further has
- an information item identifying the infrastructure facility
- an information item identifying the broadcasting infrastructure communication station
- an information item containing an overview of all dedicated items, in particular information and/or requests, in the broadcast information
- an information item indicating a priority relevance for one or more groups of communication modules.

In a further preferred embodiment the broadcast message control pointing has general network parameter setting based on user equipment autonomous scheduling.

The concept of the invention also leads to an application layer computer program of claim 22 adapted for performing one or more of the steps of the communication method.

For a more complete understanding of the invention, the invention will now be described in detail with reference to the accompanying drawing. The detailed description will illustrate and describe what is considered as a preferred embodiment of the invention.. It is therefore intended that the invention may not be limited to the exact form and detail shown and described herein, nor to anything less than the whole of the invention disclosed herein and as claimed hereinafter. Further the features described in the description, the drawing and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality.

The drawing shows in:
Fig. 1: a schematic view of an "infrastructure to vehicle"(I2V)-environment with a preferred embodiment of an I2V communication system exemplified with a tunnel scenario, which however is not meant to be limiting and the concept illustrated may also be provided to an icy bridge scenario or traffic light scenario or the like scenarios at selected infrastructure facilities;
Fig. 2: a flow chart of a preferred embodiment of a communication method which is adapted to handle a scenario as exemplified in Fig. 1;
Fig. 3: a mobile entity of a traffic participant, the mobile entity carrying a user equipment with a module for communicating with an immobile infrastructure communication station of an infrastructure;
Fig. 4: a preferred embodiment of a localized broadcast data structure either time multiplexed (scheme A) or time frequency multiplex (scheme B).

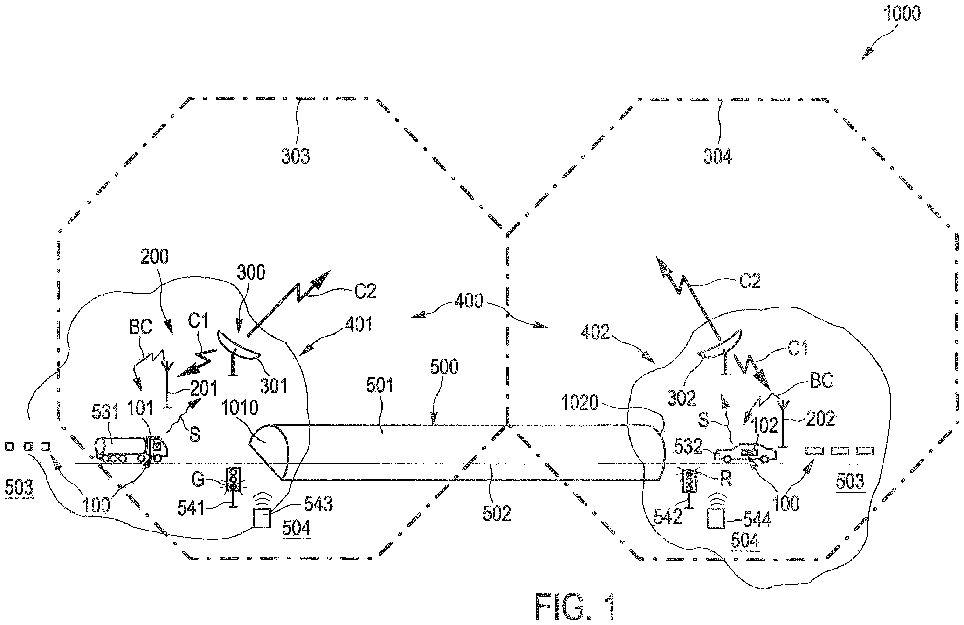

Fig. 1 shows schematically a communication system 1000 for interactive broadcast wherein the communication is established between a number of communication modules 100 and an infrastructure communication system 200. The communication is supported by an as such known communication network 300 adapted to communicate to the communication modules 100 and coupled to the infrastructure communication system 200. In the present case the communication system 1000 is exemplifying described for interactive broadcast from a configuration 400 of localized areas, here a first localized area 401 and a second localized area 402, at a location of an infrastructure facility 500. In the present case the infrastructure facility is formed by a tunnel 501 along a road 502 such that traffic participants 503 can pass through the tunnel 501. For example a truck 531 or other traffic participants 503 may enter the tunnel 501 through an entrance 1010 on the trucks side and leave the tunnel 501 through an exit 1020 on the other side. In the present case the passage of the traffic participants 503 is regulated by supervision installations 504. In the present case the supervision installations 504 are formed by a first signal light 541 and a second signal light 542 and also a first sensor 543 and a second sensor 544 which are placed respectively prior and after the tunnel 501. A sensor 543, 544 may supervise environment parameters like temperature of air, wind strength or other road or weather situation or the like. The sensors 543, 544 may also supervise a velocity or other parameters of the traffic participants 503. The sensors 543, 544 are also adapted to radiate the sensed data to the traffic participants 503, the infrastructure communication system 200 and/or the communication network 300.

In the present case, the concept of the communication method and system of interactive broadcast 1000 is described in the situation when a traffic participant like a truck 531 is in the process to enter the infrastructure facility 500, namely the tunnel 501 on the trucks side entrance 1010, and also a usual car 532 is in the process to enter the tunnel 501 on the other side, namely the aforementioned exit 1020 (for the truck). This situation may be a hazardous situation when the truck 531 carries dangerous goods as it is likely that the car 532 and the truck 531 will meet in the tunnel 501. The situation is similar to another infrastructure facility 501 for instance in form of a bridge not shown, which however could replace the tunnel 501. A hazardous situation may arise when the bridge is icy or windy and thus also a dangerous situation can arise when the truck 531 and a car 532 simultaneously enter such infrastructure facility accompanied by dangerous environmental conditions. The environmental conditions may for instance be sensed by the sensors 543, 544 -- for an icy bridge in form of a temperature or for a windy bridge in form of a wind strength or the like. Of course a direct danger is not always exposed to the other usual traffic participants like the usual car 532 as long as the truck 531 "behaves well". Nevertheless a hazardous situation immediately evolves, when --for what reason so ever-- the truck 531 has problems at the infrastructure facility 500; e.g. acute problems with inflammable goods when passing the tunnel, or acute problems to stay in the line when being on the icy bridge.

Thus, in some cases like the aforementioned situation, it is favourable to regulate moving of a traffic participant 503 to prevent --in any case--a hazardous situation arising from the simultaneous entering of a "dangerous" infrastructure facility 500 as exemplified above. In the present case a hazardous situation is very likely to be prevented upon switching the traffic light 541 to green and the traffic light 542 to red; thus, in the present example of Fig. 1 only the truck 531 with hazardous goods is entering the tunnel 501 whereas the car 532 and the other traffic participants 503 approaching from the colliding direction are prevented from entering the tunnel 501. It is also desirable that the facility supervision installations 504, in particular the traffic lights 541, 542 switch to their original state --namely green light and green light respectively-- once the truck 531 with the hazardous goods has left the tunnel 501.

In the present exemplifying situation, the communication system 1000 comprising the infrastructure communication system 200 and the communication network 300 is established to regulate the movement of the traffic participants 503 in dependence of the movement of the truck 531 via localized broadcasting of the infrastructure communication system 200 and signalling of the communication modules 100 in response to the broadcasting via the communication network 300. In the present case, the communicating network is a mobile communication telephone network like a packet switching network of a GPRS (General Packet Radio Service) or UMTS (Universal Mobile Telecommunication System). In principle also other packet switching network like a packet data network (PDM) may be used to form the communication network 300. In the present case the mobile communication network is a cell-based telephone network with a number of nodeB stations 301, 302 and respectively assigned cells 303, 304. In the present case the nodeB station 301 handles all communication network telephone communication links within the first cell 303. The second nodeB station 302 handles all telephone communication links within second cell 304. Cell 304 is thus a neighbouring cell of cell 303, which however is not obligatory. Of course also --depending on the position and length of the tunnel 501-- other cells may be placed between the first and second cell 303, 304; in such cases the first cell 303 may be only in the proximity of the second cell 304. Of course also in another situation, the tunnel 501 may be resided fully inside a single cell.

In the present case either of these scenarios allows a rather efficient and quick communication between the communication modules 100 and the nodeB station 301, 302 of a cell 303, 304 due to general network parameter settings based on autonomous scheduling. Thus, in principle each communication of a communication module 100 is transmitted to the nodeB of the cell the communication module is resided in, but also accompanied by general grant mechanisms to neighbouring cells and proximity cells. In the present case the general grant mechanism is established once the communication of a communication module 100 in the configuration 400 of localized areas, in present example the first and second localized area 401, 402, of the infrastructure facility 500 is interpreted as localized and autonomous scheduling communication; thus subsequently it can be submitted quickly throughout the communication network 300 from the original cell. In the present case, a communication of module 101 in the truck 531 is signalled to the first nodeB station 301 of the first cell 303 and transmitted accompanied with a general grant mechanism to the second nodeB station 302 of the second cell 304. Also, vice versa, any communication of the communication module 102 in the car 532 is signalled quickly to the second nodeB station 302 in the second cell 304 and transmitted under general grant mechanism to the first nodeB station 301 of the first cell 303.

Further in the present case, an infrastructure communication system 200 is established in the configuration 400 of localized areas, here the first and second localized area 401, 402, of the infrastructure facility 500 having a first infrastructure communication station 201 on the first side of the tunnel 501 (here on the side of the entrance 1010 for the truck 531) and a second infrastructure communication station 202 at the second side of the tunnel 501 (here on the other side of the exit 1020 for the truck 531). The infrastructure communication stations 201, 202 in the present case are embedded in the cell based telephone communication network 300 and thus form an additional subsystem of the communication network 300. The infrastructure communication stations 201, 202 in the present case in particular are formed as a so called pico-basisstations which are particularly adapted for a localized interactive broadcast in the first and second localized area 401 and 402 respectively. The localized broadcast of the infrastructure communication stations 201, 202 respectively is restricted to the first side of the tunnel 501, namely the entrance 1010 for the truck 531 and the second side of the tunnel 501, namely the exit 1020 for the truck 531 (entrance for the car 532), respectively. Of course also this situation may be different for other infrastructure facilities 500 like bridges, construction cars, traffic lights or simply hazardous roadsites like roadbends, -crossings or -corners or the like. In particular in another embodiment the pico-basisstations are preferably adapted for a localized interactive broadcast in the configuration 400 of localized areas, namely in the combined area of the first and second localized area 401 and 402 both. It is to be understood that this kind of organisation of the localized broadcast area concept will depend on the specific infrastructure facility 500.

The instant communication system 1000 allows an interactive broadcast from the infrastructure communication stations 201, 202 to the communication modules 100 of the traffic participants 503 and an interactive communication of the communication modules 100 in response to the interactive broadcast by means of responding to the broadcast in a signalling of the modules 100. In the present case as shown in Fig. 1 the signalling of the modules 100 is received via a nodeB station 301, 302. However --preferred in other scenarios-- is also a signalling of the communication modules 100 directly to the infrastructure communication stations 201, 202. Both alternatives are possible according to the concept of the instantly described communication method of interactive broadcast simultaneously or alternatively depending of the situation. Thus, in principle an infrastructure communication station 201, 202 of the instant example basically could also be adapted according to the functions of nodeB station 301, 302. Additionally here an infrastructure communication station 201, 202 also is adapted for a localized broadcast BC in the localized area 400 to all traffic participants 503. The infrastructure communication stations 201, 202 are implemented into the communication network by coupling to one or more of the nodeB stations 301, 302; thus, the infrastructure communication stations 201, 202 are capable to communicate with the nodeB stations 301, 302 via communication C1 practically analogue to the communication C2 of the nodeB stations 301, 302 with each other. Both, the infrastructure communication stations 201, 202 (pico-basisstations) and the nodeB station 301, 302 are capable of receiving a signal S of the communication modules 100. In the present case the signalling as of the communication module 100 resided in the truck 531 is received by the nodeB station 301 and transmitted by communication C1 to the infrastructure facility station 201. The signalling of the communication module 102 resided in the car 532 is received by the nodeB station 302 and transmitted by communication C1 to the second infrastructure communication station 202.

The communication method described below can in principle be considered as an infrastructure to vehicle communication (I2V-communication) via a broadcast BC which is interactive due to a response of a communication module 100 via the communication network 300, namely here the cell based telephone communication network TCN. The cell based telephone communication network TCN allows signalling of the communication modules 100 and further the network communication C1, C2 between nodeB stations 301, 302 and infrastructure facility stations 201, 202 on the one hand and nodeB stations 301, 302 with each other on the other hand. Of course, although not explicitly shown, here also a direct communication between infrastructure communication stations 201, 202 with each other is possible. In particular, as such known nodeB station 301, 302, can be supplemented with a broadcast module thus being adapted to the functionality of a facility communication station 201, 202.

Here, the exemplifying description of an immobile infrastructure communication station 201, 202 is indeed a preferable steadily immobile for the example of an infrastructure facility 500 in form of a tunnel 501. However also, other infrastructure facilities 500 like a construction site or the like are embraced alternatively wherein an infrastructure communication station can be only temporarily immobile. For instance an immobile infrastructure communication station 201, 202 can be attached to a temporarily placed road sign at the construction site or a temporarily placed construction car placed at the construction site. Also, a communication module 100 preferably is fixed steadily to a traffic participant's entity like a truck 531 or a car 532 in the instant example. However also a communication module 100 could be any mobile user equipment, which is mobile with a traffic participants person, namely a car driver or a truck driver. Thus, a communication module 100 described herewith can be mobile and only temporarily embedded in a traffic participants entity.

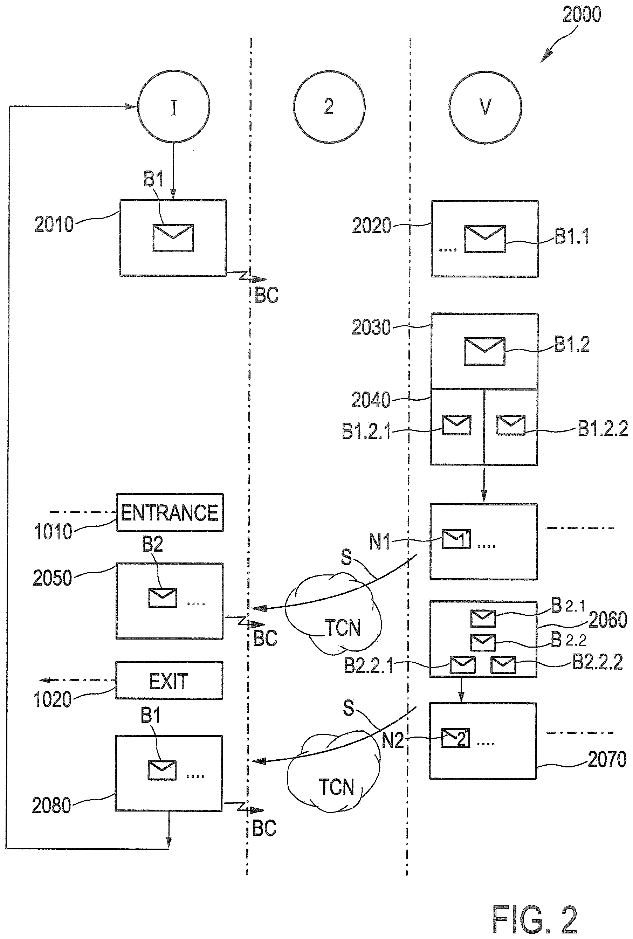

The communication method of interactive broadcast from the localized area 400 at the location of the infrastructure facility 500 is described in more detail with reference to the system 1000 and Fig. 2.

The infrastructure to vehicle "I2V"communication method 2000 of Fig. 2 provides as a first step 2010 in the localized area 400 of the infrastructure facility 500 a localized broadcast BC by means of a broadcast message B1 from the infrastructure communication stations 201, 202. In principle, such broadcast BC can be received by any communication module 100 of a traffic participant 503. Thus, in principle the signal of the broadcast BC is received in any communication module 100 of a user equipment of a traffic participant 503 as long as the traffic participant is able to receive; thus in an area of receipt. The area of receipt here is indicated by the aforementioned first and second localized area 401 and 402 respectively

Thus, in step 2020 on the vehicle side V of the method 2000 the broadcast message B1 is received by any of the communication modules 100; however, according to the concept of the invention only a predetermined condition B1.1 of the broadcast message B1 is analyzed by any of the modules 100. In detail, the broadcast message B1 contains a predetermined condition B1.1 which can be verified by the receiving communication module 100.

In the example of Fig. 1 in step 2030 the predetermined condition B1.2 is verified in the receiving communication module 101 of the truck 531. Another predetermined condition B1.1 is verified in the receiving communication module 102 of the car 532. In case of a positive verification --respectively a first predetermined condition B1.1 in the module 102 of the car 532 and a second predetermined condition B1.2 for the module 101 of the truck 531 -- in a variant the receipt of the broadcast message B1 can be but not necessarily has to be acknowledged to the infrastructure communication system 200. In the present case the predetermined condition B1.2 of the broadcast message is positively verified by the module 101 of the truck 531. Thus, in the present example the module 101 of the truck 531 is grouped into a group of modules which are selected according to the predetermined condition B1.2. The predetermined condition B1.2 in the present example identifies all modules 101 belonging to traffic participants (i.e. traffic participants mobile entities) which may carry hazardous goods or the like. Thus, --upon receipt of a predetermined condition B1.2 in step 2020 and positively verifying a predetermined condition B1.2 in step 2030-- the module 101 of the truck 531 retrieves a dedicated information B1.2.1 in step 2040. The dedicated information B1.2.1 and the dedicated request B1.2.2 both are contained in the broadcast message B1. However, due to the concept described with steps 2010 to 2040 a very efficient reduction of information reading is established by the predetermined conditions B1.1, B1.2, each of which respectively is positively verified only by those group of modules 101, which belong to the dedicated group.

On the other hand a module 102 of the car 532 is receiving a screening of the broadcast message B1 according to step 2020. Now, according to step 2030, another predetermined condition B1.1 is verified in the receiving communication module 102 of the car 532. However, the car 532 does not positively verify the predetermined condition B1.2 as the module 102 does not belong to a group of participants possibly carrying hazardous goods. Thus, in the present case the module 102 of the car 532 neither needs to retrieve a dedicated information B1.2.1 nor the dedicated request B1.2.2 from the broadcast message B1.

Consequently, at the end of step 2040 of the method 2000 the module 101 of the truck 531 has been identified to belong to a traffic participant which possibly carries hazardous goods at the entrance 1010 of the infrastructure facility 500, namely the tunnel 501. The module 101 of the truck 531 also has a dedicated information from the broadcast message B1 and a dedicated request B1.2.2 for a need to response to the broadcast B1. The car 532 instead has no need to response as a consequence of verification of predetermined condition B1.1 only .

In particular, in the present case the dedicated information B1.2.1 of the broadcast message B1 contains an information item identifying the infrastructure facility 500, namely as an entrance 1010 of a tunnel 501. Further, the dedicated information B1.2.1 contains an information item identifying the broadcast infrastructure communication station sending the broadcast message B1, namely the broadcast infrastructure communication station 201. Further, the dedicated request contains the request for a first response of the module 101 at times before approaching the infrastructure facility 500. Thus, before the truck 531 enters the entrance 1010 of the tunnel 501 the response message N1 is signalled from the module 101 via the telephone communication network TCN by the signal S to the nodeB station 301.

The signal S further is communicated by communication C1 to the infrastructure communication station 201.

After receipt of the signalling by the infrastructure communication station 201 the broadcast BC of the infrastructure communication station 201 is changed from an original state in dependence of the first response. In step 2050 a further broadcast message B2 in amended form is broadcasted from infrastructure communication station 201. The further broadcast message B2 now contains an amended dedicated information with regard to the grouped modules 100 of user equipments. In the present case, the dedicated information for the group of modules 102 belonging to cars 532 is supplemented by a warning with the meaning that "a truck with hazardous goods is passing the tunnel" 501. Thus, cars 532 approaching the tunnel 501 and in the tunnel 501 are warned and will be able to lower their velocity for example. Also, the traffic lights 542 at the exit 1020 of the tunnel 501 turn to red; thus prohibiting further cars entering the tunnel 501. In this scenario due to the response message N1 of the module 101 of the truck 531 the hazardous situation is relaxed; namely due to the warning to other traffic participants 503 upon a changed broadcast message B2 and also due to amending the state of supervision installation 504 at the infrastructure facility 500.

After the truck has passed the exit 1020 of the tunnel 501 in step 2060 now the module 101 is informed at the exit 1020 by the infrastructure communication station 202. Similar to a procedure as described in steps 2020, 2030 and 2040 and indicated by predetermined conditions B2.1, B2.2 for module 101 and dedicated information B2.2.1 and dedicated request B2.2.2 there is a need to response and also a need for a certain content of response. Consequently now, the module 101 of the truck 531 will acknowledge receipt and further in response message N2 will signalize via the telephone communication network TCN that the tunnel 501 is passed. Thus a further response message N2 is sent as indicated in step 2070.

As indicated in step 2080 the further response message N2 is received by the infrastructure communication station 202. A broadcast BC of the infrastructure communication system 200 thus changes to an original state of broadcast message B1 and the method 2000 can be executed in a further loop starting at the infrastructure side with step 2010.

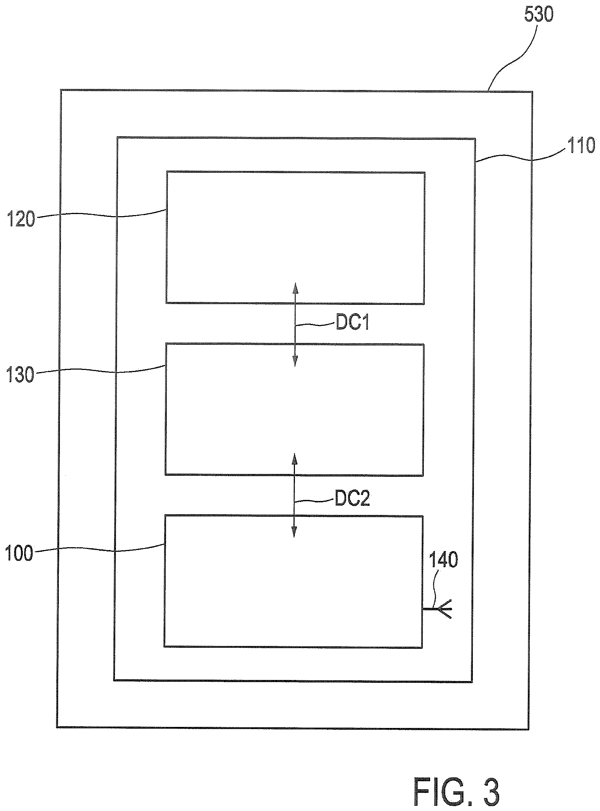

Fig. 3 shows a mobile entity 530 like a truck 531 or a car 532 of a traffic participant 503 as exemplified in Fig. 1. The mobile entity 530 carries, at least temporarily, a user equipment 110 comprising a module 100 (for instance module 101 or module 102) as exemplified in the above mentioned case. The user equipment 110 further comprises an input/output terminal 120 and an application layer 130 for internal data communication DC1 between the module 100 and the input/output terminal 120 of the user equipment 110. The internal data communication DC1 of the application layer 130 is adapted for receiving an information item of the traffic participant 503 and/or the traffic participants module carrying entity 530 via the input/output terminal 120. The internal data communication DC2 is adapted for making these and other information items available to the communication module 100 via the application layer 130. Thus, in the communication module information are available readily for response in a response message, for instance response message N1 or N2 about the traffic participant and/or the traffic participants module carrying entity. The communication module 100 is adapted for responding to a broadcast message B1 via a signalling over an interface 140; that is for instance the module 100 is passing the entrance 1010 of a tunnel 501 while the entity 530 carries hazardous goods or the like. Also the module 100 via the application layer 130 is available of information items to be communicated in a response message N2, namely for example that a truck carrying hazardous goods is leaving the tunnel at the exit 1020. The module 100 is adapted to receive broadcast messages from a localized broadcast BC of an infrastructure communication system 200, like e.g. broadcasted from the first and second infrastructure communication stations 201, 202, in particular on the aforementioned 5.9 GHz carrier. Also the module 100 is adapted to receive and sent messages via the communication network 300, like e.g. via the nodeB stations 301, 302 (of e.g. a GSM or GPRS or UMTS system or the like). Thus the module is adapted to respond to an infrastructure communication system 200 and a communication network 300 thereby providing the basis for interactive broadcast. In the present case the module 100 is provided as an integral entity of a broadcast unit to receive broadcast messages from the infrastructure communication system 200 and a communication unit receiving and sending messages via the communication network 300. In another variant of this embodiment also the units may be provided in a system of separate modules; i.e. in particular in two modules. Either the integral entity of the instant embodiment or the system of separate modules of the variant can be located in a traffic participants mobile entity.

It turned out to be of significant importance that the communication at the entrance 1010 and the exit 1020 of the facility 500 is extremely quick. To enable a quick response it is beneficial that a response --if indicated by a broadcast message-- is provided by the user equipment 110 by using general network parameter settings based on user equipment autonomous scheduling which allows and enables the transmission also in neighbouring cells. The localized broadcast contains information to be interpreted by the user equipment 530 as localized user equipment autonomous scheduling for transmission. The validity may even exit the coverage range of before mentioned nodeB to allow also for response of the user equipment to neighbour cells being in proximity or adjacent to the original cell and forwarding the response messages N1, N2 throughout the network 300.

According to the concept of the invention --even when considering that the entire information may be of relevance for all user equipments 530 and modules 100 and being provided in a broadcast channel-- the reaction of the user equipments responding or acknowledging or receiving only depends on the group the user equipment is belonging to and the type of information it is referring to. Considering that such information systems are deployed at 5.9 GHz the achievable coverage may be limited to for instance several hundred meters, hence a car or truck at 80 km/h may have less than 10 seconds for reading and reacting if needed related to the information provided. Hence, the optimized information provisioning and the grouping is a key element of this concept and also the interactive reaction on the broadcast depending on the group the user equipment is belonging to.

Whereas the interactive reaction has been described with regard to Fig. 1 and Fig. 2 the way of grouping has been indicated with regard to Fig. 3. The group of modules --for instance a group of modules 101 or a group of modules 102-- is classified in one class of a system of classes wherein the one class is distinct from another class in at least one physical circumstance or other circumstance commonly related to the group of modules and/or the module carrying mobile entity 530 of the traffic participant 503 and/or the traffic participant itself 503. This means that to provide the determined condition grouping of the modules is performed according one physical or other circumstance related to the user equipment 530 carrying participant 503.

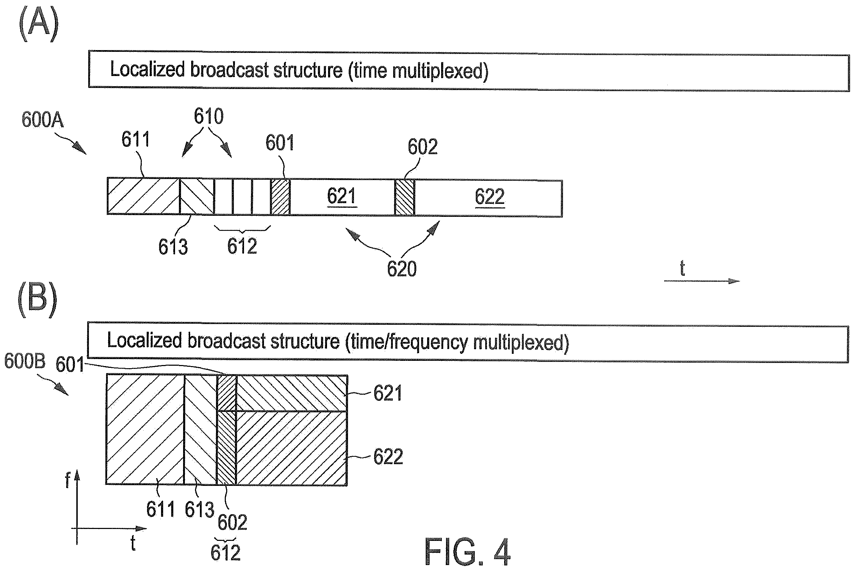

A further optimized information provisioning is presently achieved by providing a specific data structure adapted for localized broadcast and exemplified with regard to Fig. 4; namely in a first embodiment shown in the upper part (A) and a second embodiment shown in the lower part (B) of Fig. 4. The upper part is with regard to a time multiplexed localized broadcast structure showing the data structure along an unidirectional time axis t. The lower part (B) of Fig. 4 shows a corresponding data structure in a two dimensional time t and frequency f space for a time frequency multiplexed scheme. The data structure for broadcast BC however basically contains the same information. Consequently, in the following for identical or similar features are features of identical or similar function the same reference marks are used. The upper and lower parts of Fig. 4 are described as follows in summary.

The data structure 600A, 600B of a broadcast BC has a control pointing which here is established as a header 610 of several parts. A first part of the header 610 is a header 611 identifying the infrastructure communication station like for instance the station 201, 202. A second part 612 of the header 610 here is referred to as a group pointer. The group pointer comprises a time, frequency and channel specification parameter of a broadcast carrier for the data structure 600A, 600B. Thus, upon receipt of broadcast BC the module 100 will be able to directly retrieve --at the correct position-- a dedicated information or dedicated request according to a predetermined condition set in the group pointer. These and other dedicated items here are referred to as group related information 620. For instance a first kind of group related information 621 follows a first kind of group pointer 601 and a second kind of group related information 622 follows a second kind of group pointer 602.

Further, the localized broadcast data structure 600A, 600B has a third part 613 of a header comprising information related to a user equipment response scheduling parameters. In the present case the information of scheduling parameters comprise a user equipment autonomous scheduling parameter which is relevant to all modules 100 for localize response to the localized broadcast. The header 611 identifies the transmitter station.

### Summary

Communication method (2000) of interactive broadcast at a localized area (400) assigned to a location of an infrastructure facility (500), in particular for protection of a plurality of traffic participants, with a traffic participants mobile entity under supervision of the infrastructure facility, wherein
the communication can be established between
- an at least temporarily immobile infrastructure communication station (201, 202) of an infrastructure communication system having a number of infrastructure communication stations in the localized area and
- an at least temporarily mobile communication module (100, 101, 102) of a user equipment of at least one of a plurality of traffic participants, the communication method comprising the steps of:
   - receiving (2020) a localized broadcast message (B1, B2) in the communication module of the user equipment of the traffic participant, wherein the communication is assigned to a location of an infrastructure facility (500) (500) with a traffic participants mobile entity under supervision of the infrastructure facility (500), wherein
      - the broadcast message (B1, B2) contains a dedicated information (B1.2.1, B2.2.1) dedicated to a group of communication modules of user equipments wherein the group of communication modules are selected according to a predetermined condition (B1.1), and
      - the broadcast message (B1, B2) contains a request (B1.2.1, B2.2.1) for a need to response in case of a positive verification of a further condition and/or the predetermined condition by the communication module (100, 101, 102)
      - verifying (2020) the further condition and/or the predetermined condition (B1.2) by the module (100, 101, 102), and in case of the positive verification:
      - responding at least one response message to the broadcast message (B1, B2) by signaling (S) of the communication module (100, 101, 102) of the user equipment (530) into a communication network (300, TCN) communicatingly coupled to the infrastructure communication station (201, 202) of the system having stations in the localized area (400) of the infrastructure facility (500),
      wherein the further condition and/or the predetermined condition (B1.1, B1.2) is a physical condition.

## Claims

1. Communication method (2000) of interactive broadcast at a localized area (400), wherein the communication can be established between
- an at least temporarily immobile infrastructure communication station (201, 202) of an infrastructure communication system (200) having a number of infrastructure communication stations in the localized area (400) and
- an at least temporarily mobile communication module (100, 101, 102) of a user equipment (530) of at least one of a plurality of traffic participants (503), the communication method comprising the steps of:
- receiving (2020) a localized broadcast message (B1, B2) in the communication module (100, 101, 102) of the user equipment (530) of the traffic participant (503), wherein the communication is assigned to a location of an infrastructure facility (500) with a traffic participants mobile entity under supervision of the infrastructure facility (500), wherein
- the broadcast message (B1, B2) contains a dedicated information (B1.2.1, B2.2.1) dedicated to a group of communication modules of user equipments (530) wherein the group of communication modules are selected according to a predetermined condition (B1.1), and
the broadcast message (B1, B2) contains a request (B1.2.1, B2.2.1) to respond in case of a positive verification of a further condition and/or the predetermined condition by the communication module (100, 101, 102)
- verifying (2020) the further condition and/or the predetermined condition (B1.2) by the module (100, 101, 102), and in case of the positive verification:
- responding at least one response message to the broadcast message (B1, B2) by signaling (S) of the communication module (100, 101, 102) of the user equipment (530) into a communication network (300, TCN) communicatingly coupled to the infrastructure communication station (201, 202) of the system having stations in the localized area (400) of the infrastructure facility (500),
wherein the further condition and/or the predetermined condition (B1.1, B1.2) is a physical condition.

2. Method according to claim 1 wherein
- the broadcast message (B1, B2) contains a dedicated request dedicated to a group of communication modules of user equipments (530) wherein the group of communication modules are selected according to the predetermined condition (B1.1), and
- the dedicated request comprises to respond a dedicated content of response in case of a positive verification of the further condition, and/or the predetermined condition (B1.2), by the communication module.

3. Method according to one of claims 1 or 2 wherein the predetermined condition (B1.1) and/or the further condition is selected according to
- the type of traffic participant (503) ; and/or
- the relation of the traffic participant (503) to the dedicated information and/or dedicated request; and/or
- the type of mobile entity of the traffic participant (503), like a car, trailer, truck or the like.

4. Method according to one of claims 1 to 3 wherein the signaling (S) of the communication module of the user equipment (530)is into a mobile telephone network (TCN), in particular a cell-based telephone network, communicatingly coupled to the infrastructure communication station (202).

5. Method according to one of claims 1 to 4 wherein
- in case of a positive verification of the further condition, and/or of the predetermined condition (B1.2), the receipt is acknowledged and the acknowledgement is communicated from the receiving communication module by responding to the broadcast message (B1, B2) with a response message (N2) to the infrastructure communication system (200) and/or the communication network, in particular with a response message (N2) containing a dedicated content.

6. Method according to one of claims 1 to 5 wherein a response is communicated by the receiving communication module by responding to the broadcast message (B1, B2) with a sequence of response messages (N1, N2), of a first and second response message to the infrastructure communication system (200) and /or the communication network.

7. Method according to one of claims 1 to 6 wherein an information item and/or an dedication item and/or a request item in the broadcast message (B1, B2) from the infrastructure station (202) is decided to be changed or to be kept unamended in dependence of the response content and/or a state of supervision installation at the infrastructure facility (500).

8. Method according to one of claims 1 to 7 wherein
- the request to respond in case of a positive verification of the further condition, and/or the predetermined condition (B1.2), comprises a request for a first response at times before the traffic participants (503) mobile entity approaches the infrastructure facility (500), and/or
- the request to a respond in case of a positive verification of the further condition, and/or the predetermined condition (B1.2), comprises a request for a second response at times after the traffic participant's (503) mobile entity has passed the infrastructure facility (500).

9. Method according to one of claims 1 to 8 wherein an at least localized broadcasting (BC, 2010) of an information in a broadcast message (B1, B2) is performed from the infrastructure communication station (201, 202) in the localized areal (400) of the infrastructure facility (500).

10. Method according to one of claims 1 to 9 wherein upon receipt of a response by the infrastructure communication system (200) a facility action is triggered, in particular a facility action at the infrastructure facility (500) is changed from an original state in dependence of a first response (N1) and/or is changed back to an original state in dependence of a second response (N2).

11. Communication system (200) for interactive broadcast at a localized area (400), having:
- an at least temporarily immobile infrastructure communication station (201,202) of an infrastructure communication system having a number of infrastructure communication stations in the localized area (400) and
- an at least temporarily mobile communication module (100, 101, 102) of a user equipment (530) of at least one of a plurality of traffic participants (503), and having
- a communication network communicatingly coupled to the infrastructure communication station (201, 202), and
wherein the communication system (200) is adapted for:
- at least localized broadcasting of an information in a broadcast message (B1, B2) from the infrastructure communication station (201, 202),
- receiving the broadcast message (B1, B2) in the communication module (100, 101, 102) of the user equipment (530) of the traffic participant (503), **characterized in that** the localized area (400) is assigned to a location of a infrastructure facility (500) with a traffic participants (503) mobile entity under supervision of the infrastructure facility (500) and the communication system (200) is further adapted for:
- responding at least one response message to the broadcast message (B1, B2) by signaling (S) of the communication module (100, 101, 102) of the user equipment (530) into the communication network communicatingly coupled to the infrastructure communication station, and wherein the broadcast message (B1, B2) contains a dedicated information part with dedicated information dedicated to a group of communication modules of user equipments (530) wherein the group of communication modules are selected according to a predetermined condition (B1.1), and
- the broadcast message (B1, B2) has a request part with a request to respond in case of a positive verification of a further condition, and/or the predetermined condition (B1.2) by the communication module (100, 101, 102) into the communication network coupled to the infrastructure communication station (201, 202) of the system having stations in the localized area (400) of the infrastructure facility (500),
wherein the further condition and/or predetermined condition (B1.2) is a physical condition.

12. Communication system (200) according to claim 11 wherein
- the broadcast message (B1, B2)is accompanied by a broadcast message control pointing wherein the control pointing indicates the position of a dedicated information part and/or indicates the position of a dedicated request part in the broadcast message (B1, B2), wherein
- the broadcast message control pointing is a header or a control channel information related to the broadcast message (B1, B2) and pointing to the dedicated information part and/or request part of the broadcast message (B1, B2).

13. Communication system (200) according to claim 12 wherein the broadcast message (B1, B2), is accompanied by the broadcast message control pointing and is comprising control information related to the dedicated information part.

14. Communication system (200) according to one of claims 11 to 13 wherein a first immobile infrastructure communication station (201) is placed prior to and a second immobile infrastructure communication station (202) is placed after the infrastructure facility (500), wherein the first and second immobile infrastructure communication stations (201, 202) are assigned to each other.

15. Communication module (100, 101, 102) for a user equipment (530) of a traffic participant (503) adapted for use in a communication system (200) of one of claims 11 to 14, wherein the communication module (100, 101, 102) is adapted to perform the steps of:
- receiving a broadcast message (B1, B2), wherein the broadcast message (B1, B2) is part of an at least localized broadcasting of an information from the infrastructure communication station (202); wherein
- the broadcast message (B1, B2) contains a dedicated information dedicated to a group of communication modules of user equipments (530) wherein the group of communication modules are selected according to a predetermined condition (B1.1) and
- the broadcast message (B1, B2) contains a request (B1.2.1, B2.2.1) to respond in case of a positive verification of a further condition and/or the predetermined condition (B1.2) by the communication module (100, 101, 102)
- verifying (2020) the further condition and/or the predetermined condition (B1.2) by the module (100, 101, 102), and in case of the positive verification:
- responding at least one response message to the broadcast message (B1, B2) by signaling (S) of the communication module (100, 101, 102) of the user equipment (530) into a communication network (300, TCN) communicatingly coupled to the infrastructure communication station (201, 202) of the system having stations in the localized area (400) of the infrastructure facility (500)
wherein the further condition and/or predetermined condition (B1.2) is a physical condition.

16. Communication module (100, 101, 102) according to claim 15 further adapted to verify at least one of the further condition, and the predetermined condition (B1.2), and in case of a positive verification of the condition by the communication module (100, 101, 102):
- responding at least one response message to the broadcast message (B1, B2) by signaling (S) into a communication network communicatingly coupled to the infrastructure communication station (202).

17. Communication module (100, 101, 102) according to claim 15 or 16 wherin
- for signaling (S) of the communication module (100, 101, 102) into the communication network and/or the infrastructure communication system (200) a 5.9GHz carrier is used and/or
- that for signaling (S) of the communication module (100, 101, 102) into the communication network and/or the infrastructure communication system (200) a cell broadcast is used, and/or
- that for signaling (S) of the communication module (100, 101, 102) into the communication network and/or the infrastructure communication system (200) general network parameter settings based on user equipment (530) autonomous scheduling are used.

18. Localized broadcast data structure (600A, 600B) comprising at least one of a dedicated information part and a request part and a broadcast message control pointing, wherein
- the at least one of the dedicated information part and the request part is adapted to dedicate a group of communication modules (100, 101, 102) by defining
- a predetermined condition and/or
- a request to respond for the group and/or
- a content to respond for the group, and the at least one of the dedicated information part and the request part contains
- a dedicated information dedicated to a group of communication modules of user equipments (530) wherein the group of communication modules are selected according to the predetermined condition (B1.1) and
- the request to respond in case of a positive verification of a further condition, and/or the predetermined condition (B1.2) by the communication module (100, 101, 102); and
- the broadcast message control pointing has pointing information to the position of the at least one of the dedicated information part and the request part of the broadcast message (B1, B2),
wherein the further condition and/or predetermined condition (B1.2) is a physical condition.

19. Localized broadcast data structure (600A, 600B) as claimed in claim 18 wherein the position pointed at by the broadcast message control pointing is specified by a time- and/or frequency- and/or a carrier specification parameter of a broadcast carrier.

20. Localized broadcast data structure (600A, 600B) as claimed in claim 18 or 19 wherein the broadcast message control pointing comprises one or more of
- general network parameter settings based on user equipment (530) autonomous scheduling and/or
- control information related to the dedicated information part, wherein the control information is related to the last respective update of the dedicated information part.

21. Localized broadcast data structure (600A, 600B) according to one of claims 18 to 20 wherein at least one of the dedicated information part and the request part of the broadcast message (B1, B2) contains
- an information item containing an overview of all dedicated items, in particular information and/or requests, in the broadcast information
- an information item indicating a priority relevance for one or more groups of communication modules (100, 101, 102).

22. Application layer (130) computer program for internal communication between a user interface and a communication module (100, 101, 102) of a user equipment (530) adapted for performing one or more of the steps of the communication method as claimed in one of claims 1 to 10 and wherein the computer program is adapted for:
- receiving an information item of the traffic participant (503) and/or the traffic participants mobile entity, like a car, trailer, truck or the like;
- providing the information item to the communication module (100, 101, 102).

## Patentansprüche

1. Kommunikationsverfahren (2000) für interaktiven Rundfunk in einem ortsgebundenen Bereich (400), wobei die Kommunikation hergestellt werden kann zwischen
- einer zumindest zeitweise unbeweglichen Infrastruktur-Kommunikationsstation (201, 202) eines Infrastruktur-Kommunikationssystems (200), das mehrere Infrastruktur-Kommunikationsstationen in dem ortsgebundenen Bereich (400) aufweist, und
- einem zumindest zeitweise beweglichen Kommunikationsmodul (100, 101, 102) eines Nutzergeräts (530) zumindest eines einer Vielzahl von Verkehrsteilnehmern (503), wobei das Kommunikationsverfahren die folgenden Schritte umfasst:
- Empfangen (2020) einer ortsgebundenen Rundfunknachricht (B1, B2) im Kommunikationsmodul (100, 101, 102) des Nutzergeräts (530) des Verkehrsteilnehmers (503), wobei die Kommunikation einem Standort einer Infrastruktureinrichtung (500) mit einer beweglichen Einheit eines Verkehrsteilnehmers unter Überwachung der Infrastruktureinrichtung (500) zugeordnet ist, wobei
- die Rundfunknachricht (B1, B2) dedizierte Informationen (B1.2.1, B2.2.1) enthält, die einer Gruppe von Kommunikationsmodulen von Nutzergeräten (530) dediziert sind, wobei die Gruppe von Kommunikationsmodulen gemäß einer vorab bestimmten Bedingung (B1.1) ausgewählt wird, und
die Rundfunknachricht (B1, B2) eine Aufforderung (B1.2.1, B2.2.1) zum Antworten im Falle einer positiven Verifizierung einer weiteren Bedingung und/oder der vorab bestimmten Bedingung durch das Kommunikationsmodul (100, 101, 102) enthält,
- Verifizieren (2020) der weiteren Bedingung und/oder der vorab bestimmten Bedingung (B1.2) durch das Modul (100, 101, 102) und im Falle einer positiven Verifizierung:
- Antworten mit mindestens einer Antwortnachricht auf die Rundfunknachricht (B1, B2) durch Signalübertragung (S) des Kommunikationsmoduls (100, 101, 102) des Nutzergeräts (530) in ein Kommunikationsnetz (300, TCN), das mit der Infrastruktur-Kommunikationsstation (201, 202) des Systems, welches Stationen im ortsgebundenen Bereich (400) der Infrastruktureinrichtung (500) aufweist, in Kommunikationsverbindung steht,
wobei es sich bei der weiteren Bedingung und/oder der vorab bestimmten Bedingung (B1.1, B1.2) um eine physische Bedingung handelt.

2. Verfahren nach Anspruch 1, wobei
- die Rundfunknachricht (B1, B2) eine dedizierte Aufforderung enthält, die einer Gruppe von Kommunikationsmodulen von Nutzergeräten (530) dediziert ist, wobei die Gruppe von Kommunikationsmodulen gemäß der vorab bestimmten Bedingung (B1.1) ausgewählt ist, und
- die dedizierte Aufforderung umfasst, im Falle einer positiven Verifizierung der weiteren Bedingung und/oder der vorab bestimmten Bedingung (B1.2) durch das Kommunikationsmodul mit einem dedizierten Antwortinhalt zu antworten.

3. Verfahren nach einem der Ansprüche 1 oder 2, wobei die vorab bestimmte Bedingung (B1.1) und/oder die weitere Bedingung ausgewählt ist gemäß
- der Art des Verkehrsteilnehmers (503) und/oder
- der Beziehung des Verkehrsteilnehmers (503) zu den dedizierten Informationen und/oder der dedizierten Aufforderung und/oder
- der Art der beweglichen Einheit des Verkehrsteilnehmers (503), wie Auto, Anhänger, Lastkraftwagen oder dergleichen.

4. Verfahren nach einem der Ansprüche 1 bis 3, wobei die Signalübertragung (S) des Kommunikationsmoduls des Nutzergeräts (530) in ein Mobiltelefonnetz (TCN) erfolgt, insbesondere ein zellenbasiertes Telefonnetz, das mit der Infrastruktur-Kommunikationsstation (202) in Kommunikationsverbindung steht.

5. Verfahren nach einem der Ansprüche 1 bis 4, wobei
- im Falle einer positiven Verifizierung der weiteren Bedingung und/oder der vorab bestimmten Bedingung (B1.2) der Empfang bestätigt wird und die Bestätigung vom empfangenden Kommunikationsmodul aus kommuniziert wird durch Antworten auf die Rundfunknachricht (B1, B2) mit einer Antwortnachricht (N2) an das Infrastruktur-Kommunikationssystem (200) und/oder das Kommunikationsnetz, insbesondere mit einer Antwortnachricht (N2), die einen dedizierten Inhalt enthält.

6. Verfahren nach einem der Ansprüche 1 bis 5, wobei durch das empfangende Kommunikationsmodul eine Antwort kommuniziert wird durch Antworten auf die Rundfunknachricht (B1, B2) mit einer Abfolge von Antwortnachrichten (N1, N2) einer ersten und einer zweiten Antwortnachricht an das Infrastruktur-Kommunikationssystem (200) und/oder das Kommunikationsnetz.

7. Verfahren nach einem der Ansprüche 1 bis 6, wobei abhängig vom Antwortinhalt und/oder einem Überwachungsanlagenstatus an der Infrastruktureinrichtung (500) entschieden wird, dass ein Informationselement und/oder ein Dedikationselement und/oder ein Aufforderungselement in der von der Infrastrukturstation (202) stammenden Rundfunknachricht (B1, B2) geändert bzw. unverändert beibehalten wird.

8. Verfahren nach einem der Ansprüche 1 bis 7, wobei
- die Aufforderung zum Antworten im Falle einer positiven Verifizierung der weiteren Bedingung und/oder der vorab bestimmten Bedingung (B1.2) eine Aufforderung zu einer ersten Antwort umfasst, die zeitlich vor der Annäherung der beweglichen Einheit des Verkehrsteilnehmers (503) an die Infrastruktureinrichtung (500) liegt, und/oder
- die Aufforderung zum Antworten im Falle einer positiven Verifizierung der weiteren Bedingung und/oder der vorab bestimmten Bedingung (B1.2) eine Aufforderung zu einer zweiten Antwort umfasst, die zeitlich nach dem Passieren der Infrastruktureinrichtung (500) durch die bewegliche Einheit des Verkehrsteilnehmers (503) liegt.

9. Verfahren nach einem der Ansprüche 1 bis 8, wobei von der Infrastruktur-Kommunikationsstation (201, 202) aus im ortsgebundenen Bereich (400) der Infrastruktureinrichtung (500) eine zumindest ortsgebundene Rundfunkübertragung (BC, 2010) von Informationen in einer Rundfunknachricht (B1, B2) durchgeführt wird.

10. Verfahren nach einem der Ansprüche 1 bis 9, wobei nach Empfang einer Antwort durch das Infrastruktur-Kommunikationssystem (200) eine Einrichtungsmaßnahme ausgelöst wird, insbesondere eine Einrichtungsmaßnahme an der Infrastruktureinrichtung (500) abhängig von einer ersten Antwort (N1) von einem ursprünglichen Status aus geändert wird und/oder abhängig von einer zweiten Antwort (N2) wieder zurück auf einen ursprünglichen Status geändert wird.

11. Kommunikationssystem (200) für interaktiven Rundfunk in einem ortsgebundenen Bereich (400), aufweisend:
- eine zumindest zeitweise unbewegliche Infrastruktur-Kommunikationsstation (201, 202) eines Infrastruktur-Kommunikationssystems, das mehrere Infrastruktur-Kommunikationsstationen in dem ortsgebundenen Bereich (400) aufweist, und
- ein zumindest zeitweise bewegliches Kommunikationsmodul (100, 101, 102) eines Nutzergeräts (530) mindestens eines einer Vielzahl von Verkehrsteilnehmern (503), und aufweisend
- ein Kommunikationsnetz, das mit der Infrastruktur-Kommunikationsstation (201, 202) in Kommunikationsverbindung steht, und
wobei das Kommunikationssystem (200) eingerichtet ist für:
- zumindest ortsgebundene Rundfunkübertragung von Informationen in einer Rundfunknachricht (B1, B2) von der Infrastruktur-Kommunikationsstation (201, 202) aus,
- Empfangen der Rundfunknachricht (B1, B2) im Kommunikationsmodul (100, 101, 102) des Nutzergeräts (530) des Verkehrsteilnehmers (503), **dadurch gekennzeichnet, dass** der ortsgebundene Bereich (400) einem Standort einer Infrastruktureinrichtung (500) mit einer beweglichen Einheit eines Verkehrsteilnehmers (503) unter Überwachung der Infrastruktureinrichtung (500) zugeordnet ist und das Kommunikationssystem (200) ferner eingerichtet ist für:
- Antworten mit mindestens einer Antwortnachricht auf die Rundfunknachricht (B1, B2) durch Signalübertragung (S) des Kommunikationsmoduls (100, 101, 102) des Nutzergeräts (530) in das Kommunikationsnetz, das mit der Infrastruktur-Kommunikationsstation in Kommunikationsverbindung steht, und wobei die Rundfunknachricht (B1, B2) einen dedizierten Informationsteil mit dedizierten Informationen enthält, die einer Gruppe von Kommunikationsmodulen von Nutzergeräten (530) dediziert sind, wobei die Gruppe von Kommunikationsmodulen gemäß einer vorab bestimmten Bedingung (B1.1) ausgewählt ist, und
- die Rundfunknachricht (B1, B2) einen Aufforderungsteil mit einer Aufforderung aufweist, im Falle einer positiven Verifizierung einer weiteren Bedingung und/oder der vorab bestimmten Bedingung (B1.2) durch das Kommunikationsmodul (100, 101, 102) eine Antwort in das Kommunikationsnetz zu senden, welches mit der Infrastruktur-Kommunikationsstation (201, 202) des Systems verbunden ist, das Stationen im ortsgebundenen Bereich (400) der Infrastruktureinrichtung (500) aufweist,
wobei es sich bei der weiteren Bedingung und/oder der vorab bestimmten Bedingung (B1.2) um eine physische Bedingung handelt.

12. Kommunikationssystem (200) nach Anspruch 11, wobei
- die Rundfunknachricht (B1, B2) von einem Rundfunknachricht-Steuerzeiger begleitet wird, wobei der Steuerzeiger die Position eines dedizierten Informationsteils und/oder die Position eines dedizierten Aufforderungsteils in der Rundfunknachricht (B1, B2) anzeigt, wobei
- es sich bei dem Rundfunknachricht-Steuerzeiger um einen Header oder eine Steuerkanalinformation handelt, der/die die Rundfunknachricht (B1, B2) betrifft und auf den dedizierten Informationsteil und/oder Aufforderungsteil der Rundfunknachricht (B1, B2) zeigt.

13. Kommunikationssystem (200) nach Anspruch 12, wobei die Rundfunknachricht (B1, B2) vom Rundfunknachricht-Steuerzeiger begleitet wird und Steuerinformationen umfasst, die den dedizierten Informationsteil betreffen.

14. Kommunikationssystem (200) nach einem der Ansprüche 11 bis 13, wobei eine erste unbewegliche Infrastruktur-Kommunikationsstation (201) vor und eine zweite unbewegliche Infrastruktur-Kommunikationsstation (202) nach der Infrastruktureinrichtung (500) platziert ist, wobei die erste und die zweite unbewegliche Infrastruktur-Kommunikationsstation (201, 202) einander zugeordnet sind.

15. Kommunikationsmodul (100, 101, 102) für ein Nutzergerät (530) eines Verkehrsteilnehmers (503), das für eine Verwendung in einem Kommunikationssystem (200) nach einem der Ansprüche 11 bis 14 eingerichtet ist, wobei das Kommunikationsmodul (100, 101, 102) dafür eingerichtet ist, die folgenden Schritte durchzuführen:
- Empfangen einer Rundfunknachricht (B1, B2), wobei die Rundfunknachricht (B1, B2) Teil einer zumindest ortsgebundenen Rundfunkübertragung von Informationen von der Infrastruktur-Kommunikationsstation (202) ist, wobei
- die Rundfunknachricht (B1, B2) dedizierte Informationen enthält, die einer Gruppe von Kommunikationsmodulen von Nutzergeräten (530) dediziert ist, wobei die Gruppe von Kommunikationsmodulen gemäß einer vorab bestimmten Bedingung (B1.1) ausgewählt ist, und
- die Rundfunknachricht (B1, B2) eine Aufforderung (B1.2.1, B2.2.1) zum Antworten im Falle einer positiven Verifizierung einer weiteren Bedingung und/oder der vorab bestimmten Bedingung (B1.2) durch das Kommunikationsmodul (100, 101, 102) enthält
- Verifizieren (2020) der weiteren Bedingung und/oder der vorab bestimmten Bedingung (B1.2) durch das Modul (100, 101, 102) und im Falle der positiven Verifizierung:
- Antworten mit mindestens einer Antwortnachricht auf die Rundfunknachricht (B1, B2) durch Signalübertragung (S) des Kommunikationsmoduls (100, 101, 102) des Nutzergeräts (530) in ein Kommunikationsnetz (300, TCN), das mit der Infrastruktur-Kommunikationsstation (201, 202) des Systems, welches Stationen im ortsgebundenen Bereich (400) der Infrastruktureinrichtung (500) aufweist, in Kommunikationsverbindung steht,
wobei es sich bei der weiteren Bedingung und/oder der vorab bestimmten Bedingung (B1.2) um eine physische Bedingung handelt.

16. Kommunikationsmodul (100, 101, 102) nach Anspruch 15, das ferner eingerichtet ist zum Verifizieren mindestens einer der weiteren Bedingung und der vorab bestimmten Bedingung (B1.2) sowie im Falle einer positiven Verifizierung der Bedingung durch das Kommunikationsmodul (100, 101, 102):
- Antworten mit mindestens einer Antwortnachricht auf die Rundfunknachricht (B1, B2) durch Signalübertragung (S) in ein mit der Infrastruktur-Kommunikationsstation (202) in Kommunikationsverbindung stehendes Kommunikationsnetz.

17. Kommunikationsmodul (100, 101, 102) nach Anspruch 15 oder 16, wobei
- für die Signalübertragung (S) des Kommunikationsmoduls (100, 101, 102) in das Kommunikationsnetz und/oder das Infrastruktur-Kommunikationssystem (200) ein 5,9 GHz-Träger verwendet wird und/oder
- für die Signalübertragung (S) des Kommunikationsmoduls (100, 101, 102) in das Kommunikationsnetz und/oder das Infrastruktur-Kommunikationssystem (200) ein Zellenrundfunk verwendet wird und/oder
- für die Signalübertragung (S) des Kommunikationsmoduls (100, 101, 102) in das Kommunikationsnetz und/oder das Infrastruktur-Kommunikationssystem (200) auf autonomer Planung von Nutzergeräten (530) basierende allgemeine Netzparametereinstellungen verwendet werden.

18. Datenstruktur (600A, 600B) für ortsgebundenen Rundfunk, die mindestens einen eines dedizierten Informationsteils und eines Aufforderungsteils und eines Rundfunknachricht-Steuerzeigers umfasst, wobei
- der mindestens eine des dedizierten Informationsteils und des Aufforderungsteils dafür eingerichtet ist, eine Gruppe von Kommunikationsmodulen (100, 101, 102) zu dedizieren durch Definieren
- einer vorab bestimmten Bedingung und/oder
- einer Aufforderung zum Antworten für die Gruppe und/oder
- eines zu antwortenden Inhalts für die Gruppe, und der mindestens eine des dedizierten Informationsteils und des Aufforderungsteils Folgendes enthält:
- dedizierte Informationen, die einer Gruppe von Kommunikationsmodulen von Nutzergeräten (530) dediziert sind, wobei die Gruppe von Kommunikationsmodulen gemäß der vorab bestimmten Bedingung (B1.1) ausgewählt ist, und
- die Aufforderung zum Antworten im Falle einer positiven Verifizierung einer weiteren Bedingung und/oder der vorab bestimmten Bedingung (B1.2) durch das Kommunikationsmodul (100, 101, 102) und
- der Rundfunknachricht-Steuerzeiger Informationen aufweist, welche die auf Position des mindestens einen des dedizierten Informationsteils und des Aufforderungsteils der Rundfunknachricht (B1, B2) zeigen,
wobei es sich bei der weiteren Bedingung und/oder der vorab bestimmten Bedingung (B1.2) um eine physische Bedingung handelt.

19. Datenstruktur (600A, 600B) für ortsgebundenen Rundfunk nach Anspruch 18, wobei die durch den Rundfunknachricht-Steuerzeiger gezeigte Position durch einen Zeit- und/oder Frequenz- und/oder einen Trägerspezifizierungsparameter eines Rundfunkträgers spezifiziert ist.

20. Datenstruktur (600A, 600B) für ortsgebundenen Rundfunk nach Anspruch 18 oder 19, wobei der Rundfunknachricht-Steuerzeiger eines oder mehrere der Folgenden aufweist:
- auf autonomer Planung von Nutzergeräten (530) basierende allgemeine Netzparametereinstellungen und/oder
- den dedizierten Informationsteil betreffende Steuerinformationen, wobei die Steuerinformationen die letzte jeweilige Aktualisierung des dedizierten Informationsteils betreffen.

21. Datenstruktur (600A, 600B) für ortsgebundenen Rundfunk nach einem der Ansprüche 18 bis 20, wobei mindestens einer des dedizierten Informationsteils und des Aufforderungsteils der Rundfunknachricht (B1, B2) Folgendes enthält:
- ein Informationselement, das eine Übersicht aller dedizierten Elemente in den Rundfunkinformationen enthält, insbesondere Informationen und/oder Aufforderungen,
- ein Informationselement, das eine Prioritätsrelevanz für eine oder mehrere Gruppen von Kommunikationsmodulen (100, 101, 102) anzeigt.

22. Anwendungsschicht- (130) Computerprogramm für interne Kommunikation zwischen einer Nutzerschnittstelle und einem Kommunikationsmodul (100, 101, 102) eines Nutzergeräts (530), das zum Durchführen eines oder mehrerer der Schritte des Kommunikationsverfahrens nach einem der Ansprüche 1 bis 10 eingerichtet ist, und wobei das Computerprogramm eingerichtet ist zum:
- Empfangen eines Informationselements des Verkehrsteilnehmers (503) und/oder der beweglichen Einheit des Verkehrsteilnehmers, wie Auto, Anhänger, Lastkraftwagen oder dergleichen,
- Bereitstellen des Informationselements an das Kommunikationsmodul (100, 101, 102).

## Revendications

1. Procédé de communication (2000) de diffusion interactive dans une zone localisée (400), dans lequel la communication peut être établie entre :
- une station de communication d'infrastructure immobile (201, 202), au moins à titre provisoire, d'un système de communication d'infrastructure (200) constitué de plusieurs stations de communication d'infrastructure dans la zone localisée (400), et
- un module de communication mobile (100, 101, 102), au moins à titre provisoire, d'un équipement utilisateur (530) constitué d'un minimum d'un participant sur plusieurs participants au trafic (503), le procédé de communication comprenant les étapes de :
- réception (2020) d'un message de diffusion localisé (B1, B2) dans le module de communication (100, 101, 102) de l'équipement utilisateur (530) du participant au trafic (503), dans lequel la communication est affectée à un emplacement d'infrastructure (500), ladite infrastructure (500) supervisant une entité mobile de participants au trafic et dans laquelle
- le message de diffusion (B1, B2) contient une information dédiée (B1.2.1, B2.2.1) à un groupe de modules de communication d'équipements utilisateurs (530) dans lequel le groupe de modules de communication est sélectionné selon une condition prédéterminée (B1.1), et
le message de diffusion (B1, B2) peut émettre une requête (B1.2.1, B2.2.1) de réponse en cas de vérification positive d'une autre condition et/ou de la condition prédéterminée par le module de communication (100, 101, 102)
- vérifier (2020) la condition supplémentaire et/ou la condition prédéterminée (B1.2) par le module (100, 101, 102), et en cas de vérification positive :
- répondre à au moins un message de réponse au message de diffusion (B1, B2) par signalisation (S) du module de communication (100, 101, 102) de l'équipement utilisateur (530) dans un réseau de communication (300, TCN) couplé de façon à communiquer avec la station de communication d'infrastructure (201, 202) du système équipé de stations dans la zone localisée (400) de l'infrastructure (500),
dans laquelle la condition supplémentaire et/ou la condition prédéterminée (B1.1, B1.2) est une condition physique.

2. Procédé selon la revendication 1, dans lequel
- le message de diffusion (B1, B2) contient une requête dédiée à un groupe de modules de communication d'équipements utilisateurs (530) dans lequel le groupe de modules de communication est sélectionné selon la condition prédéterminée (B1.1), et dans lequel :
- la requête dédiée prévoit de répondre à un contenu de réponse dédié en cas de vérification positive de l'état supplémentaire et/ou de l'état prédéterminé (B1.2) par le module de communication.

3. Procédé selon l'une des revendications 1 ou 2, dans lequel la condition prédéterminée (B1.1) et/ou la condition supplémentaire sont choisies en fonction
- du type de participant au trafic (503) ; et/ou
- de la relation entre le participant au trafic (503) et l'information et/ou la requête dédiée ; et/ou
- du type d'entité mobile du participant au trafic (503), telle qu'une voiture, une remorque, un camion ou toute autre entité mobile similaire.

4. Procédé selon l'une des revendications 1 à 3, dans lequel la signalisation (S) du module de communication de l'équipement utilisateur (530) se trouve dans un réseau téléphonique mobile (TCN), en particulier un réseau téléphonique cellulaire, couplé de façon à communiquer avec la station de communication de l'infrastructure (202).

5. Procédé selon l'une des revendications 1 à 4, dans lequel :
- en cas de vérification positive de l'état supplémentaire et/ou de l'état prédéterminé (B1.2), la réception est accusée et l'accusé de réception est communiqué par le module de communication de réception en réponse au message diffusé (B1, B2) par un message de réponse (N2) au système de communication de l'infrastructure (200) et/ou au réseau de communication, en particulier par un message de réponse (N2) incluant un contenu dédié.

6. Procédé selon l'une des revendications 1 à 5, dans lequel une réponse est communiquée par le module de communication de réception en réponse au message de diffusion (B1, B2) comprenant une séquence de messages de réponse (N1, N2) d'un premier et d'un second message de réponse au système de communication d'infrastructure (200) et/ou au réseau de communication.

7. Procédé selon l'une des revendications 1 à 6, dans lequel l'on décide de modifier ou de ne pas modifier un élément d'information et/ou un élément de dédicace et/ou un élément de requête dans le message de diffusion (B1, B2) de la station d'infrastructure (202) en fonction du contenu de la réponse et/ou de l'état de l'installation de supervision de l'infrastructure (500).

8. Procédé selon l'une des revendications 1 à 7, dans lequel :
- la requête de réponse en cas de vérification positive de l'état supplémentaire et/ou de l'état prédéterminé (B1.2) comprend l'envoi d'une requête de première réponse précédant l'arrivée des participants au trafic (503) à l'infrastructure (500), et/ou
- la requête de réponse dans le cas d'une vérification positive de l'état supplémentaire et/ou de l'état prédéterminé (B1.2), comprend l'envoi d'une requête de deuxième réponse une fois que l'entité mobile du participant au trafic (503) a dépassé l'installation d'infrastructure (500).

9. Procédé selon l'une des revendications 1 à 8, dans lequel
une diffusion au moins localisée (BC, 2010) d'une information dans un message diffusé (B1, B2) est effectuée à partir de la station de communication de l'infrastructure (201, 202) dans la zone localisée (400) de l'infrastructure (500).

10. Procédé selon l'une des revendications 1 à 9, dans lequel une action d'installation est déclenchée par la réception d'une réponse par le système de communication d'infrastructure (200), laquelle action d'installation, au niveau de l'infrastructure (500), voit son état original modifié selon une première réponse (N1) et/ou retrouve son état d'origine selon une seconde réponse (N2).

11. Système de communication (200) de diffusion interactive dans une zone localisée (400), disposant :
- d'une station de communication d'infrastructure immobile, au moins à titre provisoire - (201, 202) d'un système de communication d'infrastructure disposant d'un certain nombre de stations de communication d'infrastructure dans la zone localisée (400), et
- un module de communication mobile - au moins temporairement - (100, 101, 102) d'un équipement utilisateur (530) d'au moins un participant sur plusieurs participants au trafic (503), et comportant
- un réseau de communication couplé de façon à communiquer avec la station de communication de l'infrastructure (201, 202), et
dans laquelle le système de communication (200) est conçu pour :
- au moins la diffusion localisée d'une information dans un message diffusé (B1, B2) à partir de la station de communication de l'infrastructure (201, 202),
- la réception du message de diffusion (B1, B2) dans le module de communication (100, 101, 102) de l'équipement utilisateur (530) du participant au trafic (503), **caractérisé en ce que** la zone localisée (400) est affectée à un emplacement d'une infrastructure (500) comportant une entité mobile de participants au trafic (503) placée sous la supervision de l'infrastructure (500) et **en ce que** le système de communication (200) est conçu pour :
- émettre au moins un message de réponse au message de diffusion (B1, B2) par signalisation (S) du module de communication (100, 101, 102) de l'équipement utilisateur (530) dans le réseau de communication couplé de façon à communiquer avec la station de communication de l'infrastructure, et dans lequel le message de diffusion (B1, B2) contient un élément d'information dédié comprenant des informations dédiées à un groupe de modules de communication d'équipements utilisateurs (530) dans lequel le groupe de modules de communication est sélectionné selon une condition prédéterminée (B1.1), et
- le message diffusé (B1, B2) comporte un élément de requête avec requête de réponse en cas de vérification positive d'une condition supplémentaire et/ou de la condition prédéterminée (B1.2) par le module de communication (100, 101, 102) dans le réseau de communication couplé à la station de communication d'infrastructure (201, 202) du système disposant de stations dans la zone localisée (400) de l'infrastructure (500),
dans laquelle la condition supplémentaire et/ou la condition prédéterminée (B1.2) sont une condition physique.

12. Système de communication (200) selon la revendication 11, dans lequel
- le message diffusé (B1, B2) est accompagné d'un pointage de commande de message diffusé dans lequel le pointage de commande indique la position d'un élément d'information dédié et/ou indique la position d'un élément de requête dédié dans le message diffusé (B1, B2), dans lequel
- le pointage de commande de message de diffusion est un en-tête ou une information de canal de commande liée au message de diffusion (B1, B2) et pointant vers l'élément d'information dédié et/ou l'élément requête du message de diffusion (B1, B2).

13. Système de communication (200) selon la revendication 12, dans lequel le message diffusé (B1, B2), est accompagné du pointage de contrôle du message diffusé et comprend des informations de contrôle relatives à l'élément d'information dédié.

14. Système de communication (200) selon l'une des revendications 11 à 13, dans lequel une première station de communication d'infrastructure immobile (201) est placée avant l'infrastructure (500) et une seconde station de communication d'infrastructure immobile (202) est placée après ladite infrastructure (500), dans laquelle les première et seconde stations de communication d'infrastructure immobile (201, 202) sont affectées l'une à l'autre.

15. Module de communication (100, 101, 102) pour un équipement utilisateur (530) d'un participant au trafic (503) pouvant être utilisé dans un système de communication (200) de l'une des revendications 11 à 14, dans lequel le module de communication (100, 101, 102) est conçu pour réaliser les étapes de :
- réception d'un message de diffusion (B1, B2), dans lequel le message de diffusion (B1, B2) fait partie d'une diffusion au moins localisée d'une information provenant de la station de communication de l'infrastructure (202) ; dans lequel
- le message de diffusion (B1, B2) contient une information dédiée à un groupe de modules de communication d'équipements utilisateurs (530) dans laquelle le groupe de modules de communication est sélectionné selon une condition prédéterminée (B1.1) et
- le message de diffusion (B1, B2) contient une requête (B1.2.1, B2.2.1) de réponse en cas de vérification positive d'une autre condition et/ou de la condition prédéterminée (B1.2) par le module de communication (100, 101, 102)
- vérifier (2020) la condition supplémentaire et/ou la condition prédéterminée (B1.2) par le module (100, 101, 102), et en cas de vérification positive :
- Émettre au moins un message de réponse en réponse au message de diffusion (B1, B2) par signalisation (S) du module de communication (100, 101, 102) de l'équipement utilisateur (530) dans un réseau de communication (300, TCN) couplé de façon à communiquer avec la station de communication de l'infrastructure (201, 202) du système disposant de stations dans la zone localisée (400) de l'infrastructure (500)
dans laquelle la condition supplémentaire et/ou la condition prédéterminée (B1.2) sont une condition physique.

16. Module de communication (100, 101, 102) selon la revendication 15, conçu en outre pour vérifier au moins l'une des autres conditions ainsi que la condition prédéterminée (B1.2), et en cas de vérification positive de la condition par le module de communication (100, 101, 102) :
- émettre au moins un message de réponse en réponse au message de diffusion (B1, B2) par signalisation (S) dans un réseau de communication couplé de façon à communiquer avec la station de communication de l'infrastructure (202).

17. Module de communication (100, 101, 102) selon la revendication 15 ou 16, dans lequel
- une porteuse de 5,9 GHz est utilisée pour réaliser la signalisation (S) du module de communication (100, 101, 102) dans le réseau de communication et/ou le système de communication d'infrastructure (200), et/ou
- une diffusion cellulaire réalise la signalisation (S) du module de communication (100, 101, 102) dans le réseau de communication et/ou le système de communication d'infrastructure (200), et/ou
- des paramètres réseau généraux basés sur une planification autonome de l'équipement utilisateur (530) sont utilisés pour réaliser la signalisation (S) du module de communication (100, 101, 102) dans le réseau de communication et/ou le système de communication d'infrastructure (200).

18. Structure de données de radiodiffusion localisée (600A, 600B) comprenant au moins un élément d'information dédié, un élément de requête et un pointage de contrôle de message de radiodiffusion, dans laquelle
- au moins un des éléments d'information dédiés et l'élément requête sont conçus pour dédier un groupe de modules de communication (100, 101, 102) en définissant
- une condition prédéterminée (pointeur de groupe) et/ou
- une requête de réponse pour le groupe et/ou
- un contenu de réponse pour le groupe, et le contenu d'au moins un des éléments d'information dédiés et de l'élément requête
- une information dédiée à un groupe de modules de communication d'équipements d'utilisateur (530) dans laquelle le groupe de modules de communication est sélectionné selon la condition prédéterminée (B1.1) et
- la requête de réponse en cas de vérification positive d'une autre condition et/ou de la condition prédéterminée (B1.2) par le module de communication (100, 101, 102) ; et
- le pointage de la commande de message de diffusion dispose d'informations désignant la position d'au moins l'un des éléments d'information dédiés et l'élément requête du message de diffusion (B1, B2), dans laquelle la condition supplémentaire et/ou la condition prédéterminée (B1.2) sont une condition physique.

19. Structure de données de radiodiffusion localisée (600A, 600B) telle que revendiquée dans la revendication 18, dans laquelle la position pointée par le pointage de la commande de message de radiodiffusion est spécifiée par un paramètre de temps - et/ou de fréquence - et/ou un paramètre de spécification d'une porteuse de radiodiffusion.

20. Structure de données de diffusion localisée (600A, 600B) telle que revendiquée dans la revendication 18 ou 19, dans laquelle le pointage de la commande de message de diffusion comprend un(e) ou plusieurs
- paramètres réseau généraux basés sur la planification autonome de l'équipement de l'utilisateur (530) et/ou
- informations de contrôle relatives à l'élément d'information dédié, dans lequel les informations de contrôle sont liées à la dernière mise à jour de l'élément d'information dédié.

21. Structure de données de diffusion localisée (600A, 600B) selon l'une des revendications 18 à 20, dans laquelle au moins l'un des éléments d'information dédiés et l'élément de requête du message de diffusion (B1, B2) contiennent
- un élément d'information contenant une vue d'ensemble de tous les éléments dédiés, en particulier les informations et/ou les requêtes, dans l'information diffusée
- un élément d'information indiquant une pertinence prioritaire pour un ou plusieurs groupes de modules de communication (100, 101, 102).

22. Programme informatique en couches d'application (130) pour la mise en place d'une communication interne entre une interface utilisateur et un module de communication (100, 101, 102) d'équipement utilisateur (530) conçu pour suivre une ou plusieurs des étapes du procédé de communication tel que revendiqué dans l'une des revendications 1 à 10 et dans lequel le programme informatique est conçu pour :
- recevoir un élément d'information du participant au trafic (503) et/ou de l'entité mobile des participants au trafic, telle qu'une voiture, une remorque, un camion ou toute autre entité mobile similaire ;
- fournir l'information au module de communication (100, 101, 102).
